# EUROPEAN PATENT SPECIFICATION

(11) **EP 3 255 202 B1**
(45) Date of publication and mention of the grant of the patent: **13.11.2019**
(21) Application number: 16382263.8
(22) Date of filing: 09.06.2016
(51) Int. Cl.: D06F 58/20, D06F 58/28

(54) **HOUSEHOLD APPLIANCE COMPRISING A HEAT PUMP**
HAUSHALTSGERÄT MIT EINER WÄRMEPUMPE
APPAREIL MÉNAGER COMPORTANT UNE POMPE À CHALEUR

(43) Date of publication of application: 13.12.2017
(73) Proprietor: BSH Hausgeräte GmbH, 81739 München (DE); BSH Electrodomésticos España, S.A., 50016 Zaragoza (ES)
(72) Inventor: Capablo Sese, Joaquin Jesus, 50003 Zaragoza (ES); Otero Garcia, Iñaki, Villaba (Navarra) (ES)

(56) References cited:
- EP-A1- 2 466 001
- EP-A2- 1 493 860

## Description

The invention relates to a household appliance comprising a heat pump, the heat pump comprising a compressor, a condenser, an expansion device, and an evaporator. The invention also relates to a method for operating such a household appliance. The invention is particularly useful for laundry drying appliances.

The use of the heat pumps in home appliances with drying functions is steadily growing. A heat pump typically comprises a heat pump circuit having a compressor, a condenser, an expansion device, and an evaporator connected by refrigerant lines to form a refrigerant circuit. Such a heat pump is also called a compressor heat pump.

In these home appliances, a flow of dry process air applied to a load to be dried is usually heated by means of the condenser. The process air is usually propelled by a fan. Dehumidification is effected by cooling the humid process air by passing it over the cold surfaces of the evaporator. The condenser and the evaporator thus act as heat exchangers to exchange heat between the refrigerant and the process air. The temperature difference between the condenser and the evaporator is produced due to compressing a previously evaporated refrigerant in a superheated gas state, which is able to condense at the condenser due to being cooled down by the dry air, which is then expanded by the expansion device, and which is then evaporated again at the evaporator by the humid air coming from the load to be dried.

In some cases - for example when using an AC compressor - the heat exchange capacity of the heat exchangers cannot be regulated by adapting the operation of the compressor, even if, at some phases of the drying cycle, lower capacities of the evaporator and/or of the condenser would benefit the global performance of the household appliance.

Laundry drying appliances comprising heat pumps are generally known. For example, WO 2014/067797 A2 discloses a laundry drying appliance that has a fan for moving process air, a heat pump and a temperature measurement device, wherein the laundry drying appliance is designed to set a ventilation output of the fan depending on at least one temperature detected at the heat pump by means of the temperature measurement device.

WO 2013/144875 A1 discloses a heat exchanger for a laundry drying appliance which comprises at least one set of pipes, each set of pipes comprising at least two pipes, wherein the pipes are mechanically connected by at least one connection structure (also called a "finned tube heat exchanger"). At least two pipes are made from different metals having a different thermal expansion coefficient; at least two of the pipes having a different thermal expansion coefficient are joined by a soldered joint (lib) or by a brazed joint. At the joint (lib) of the two pipes, the pipe made of the metal having a lower thermal expansion coefficient is inserted into the pipe made of the metal having a higher thermal expansion coefficient. Also disclosed is a household appliance, in particular clothes treatment appliance, comprising at least one such heat exchanger, and a method for manufacturing such heat exchanger.

EP 2 466 001 A1 discloses a household appliance comprising a heat pump, the heat pump comprising a compressor, a first heat exchanger, an expansion device, and a second heat exchanger, wherein the household appliance further comprises at least one refrigerant redirection device in form of one 4/2 directional control valve having a first port, a second port, a third port, and a fourth port to reverse a flow direction of a refrigerant through the first heat exchanger and/or through the second heat exchanger, wherein in a first valve position of the 4/2 directional control valve, its first port is connected to its second port and its third port is connected to its fourth port, and, in a second valve position of the 4/2 directional control valve, wherein its first port is connected to its third port and its second port is connected to its fourth port. When switching between positions of the 4/2 directional control valve, a flow direction of the refrigerant within the heat pump is also reversed in that the output of the compressor is connected to a different heat exchanger. Thus, when switching between positions of the 4/2 directional control valve, the functions of these heat exchangers as condensor and evaporator also switch.

EP 1 493 860 A2 discloses a household appliance comprising a heat pump, the heat pump comprising a compressor, a first heat exchanger, an expansion device, and a second heat exchanger, wherein the household appliance further comprises at least one refrigerant redirection device. Switching this refrigerant redirection device also causes the heat exchangers to switch functions as a condenser and an evaporator, respectively.

It is an object of the present invention to at least partially overcome the problems associated with the prior art. It is a particular object of the present invention to provide an easily incorporable means to regulate a capacity of the heat pump heat exchangers independently from operating the compressor.

The object is achieved according to the features of the independent claims. Advantageous embodiments can be found, e.g., in the dependent claims and/or in the description.

The object is achieved according to a household appliance comprising a heat pump, the heat pump comprising a compressor, a condenser, an expansion device, and an evaporator, wherein the household appliance further comprises at least one refrigerant redirection device to reverse a flow direction of a refrigerant through the condenser and/or through the evaporator.

This gives the advantage that a flow direction of the refrigerant through the evaporator and/or through the condenser is reversed. Particularly, this household appliance allows reversing the use of ports of the condenser and/or evaporator as inlet and outlet ports. The flow direction of the refrigerant in the refrigerant circuit / heat pump, however, is not reversed. By this, the heat exchange conditions between the refrigerant and the surrounding of the evaporator and/or the condenser (e.g. process air) are changed which in turn changes the heat exchange ability or capacity of the evaporator and/or the condenser. Also, refrigerant redirection devices are robust with low complexity, are cost-effective, and are easy to integrate into existing household appliances.

Furthermore, the refrigerant redirection device is at least one directional control valve, wherein, in a first valve position of the at least one directional control valve, its first port is connected to its second port and its third port is connected to its fourth port, and wherein, in a second valve position, its first port is connected to its third port and its second port is connected to its fourth port. This enables a particular compact and robust redirection device. Furthermore, the use of a valve enables a particularly simple assembly process since a valve can easily be integrated as part of the heat pump circuit of, e.g., an existing dryer or washer-dryer platform.

Also, the at least one directional control valve is a 4/2 directional control valve (4-way valve). Such a valve may be implemented in a specially compact and robust design.

Specifically, the household appliance comprises a first 4/2 directional control valve wherein its first port is connected to an outlet of the compressor, its second port is connected to a first port of the condenser, its third port is connected to a second port of the condenser, and its fourth port is connected to an inlet of the expansion device. This enables a flow reversal in the condenser. Thus, in the first valve position, the refrigerant can flow from the compressor to the first port of the condenser, through the condenser to its second port, and from there to the expansion device. In the second valve position, the refrigerant can flow from the compressor to the second port of the condenser, through the condenser to its first port, and from there to the expansion device.

Additionally, the household appliance comprises a second 4/2 directional control valve wherein its first port is connected to an outlet of the expansion device, its second port is connected to a first port of the evaporator, its third port is connected to a second port of the evaporator, and its fourth port is connected to an inlet of the compressor. This enables a flow reversal in the evaporator. Thus, in the first valve position, the refrigerant can flow from the expansion device to the first port of the evaporator, through the evaporator to its second port, and from there to the compressor. In the second valve position, the refrigerant can flow from the expansion device to the second port of the evaporator, through the evaporator to its first port, and from there to the compressor.

The compressor, the condenser, the expansion device, and the evaporator may be connected in the described order (e.g. by refrigerant lines) to form a closed refrigerant circuit. The expansion device may be a thermal expansion valve.

This household appliance may comprise only a refrigerant redirection device for the condenser, only a refrigerant redirection device for the evaporator, or both.

It is an embodiment that the compressor is an AC compressor. It is particularly advantageous to employ the at least one refrigerant redirection device in combination with such a compressor since AC compressors are rugged and low-cost components. It may be more cost effective to combine an AC compressor with at least one refrigerant redirection device than to use a compressor powered by, e.g., a BLDC motor. Generally, the at least one refrigerant redirection device can also advantageously be used in combination with other types of compressors, even with BLDC-powered compressors.

The valve may be an electrically controlled valve, e.g. actuated by a solenoid or a motor.

It is an embodiment that the household appliance comprises a control device (e.g. a central control unit) that is adapted to control or set the valve positions of the least one directional control valve for the evaporator and/or for the condenser. The setting may be based on the desired capacity of the evaporator and/or of the condenser as heat exchangers Thus, the at least one directional control valve (or, more generally, the at least one refrigerant redirection device) may be automatically controlled to change the capacity of the evaporator and/or of the condenser in accordance with needs to reduce an energy consumption of the household appliance. The control device may, e.g., switch at least one refrigerant redirection device based on reaching or performing one or more phases of an operation process or cycle, e. g. a drying cycle. Alternatively or additionally, the control device may switch the at least one refrigerant redirection device based on reaching at least one pre-defined condition, e. g. at least one measured condition, e. g. a threshold value for a temperature, a pressure, a laundry moisture value etc. To this effect, the control device may be connected to at least one sensor, e.g. a temperature sensor for the process air, a temperature sensor for the compressor, a temperature sensor for the refrigerant, a pressure sensor for the process air, a pressure sensor for the refrigerant, etc.

In one embodiment, the control device may automatically determine whether to switch valve positions only for the evaporator, only of the condenser, or for both the evaporator and the condenser (if existing).

It is an embodiment that the evaporator and/or the condenser are finned tube heat exchangers to exchange heat between the refrigerant and the process air. Such heat exchangers allow high heat transfer efficiencies and are easy to install.

It is an embodiment that ports of the evaporator and/or the condenser (which act as refrigerant inlets and refrigerant outlets) are positioned at opposite ends of the evaporator and the condenser, respectively, with respect to a flow direction of the process air. This gives the advantageous effect that a flow path of the refrigerant flowing through the evaporator and/or the condenser can be widely and gradually spread along a direction of the process air. This, in turn, allows a noticeable difference in the capacity depending on the flow direction of the refrigerant.

For example, the first port of the evaporator and/or of the condenser may be positioned at a rear region of a flow path of the process air through this component and the second port is positioned at a front of this flow path. Then, the refrigerant enters the component through the first port and thus initially exchanges heat with process air that has already been flowing through the evaporator and/or condenser. By flowing to the second port, the refrigerant flows in a general direction opposite to the direction of the process air. Such a state may also be called a "counter-flow state".

In contrast, in a "parallel-flow" state, the refrigerant enters through the second port and thus initially exchanges heat with process air just arriving at the evaporator and/or condenser which may have a higher and lower temperature, respectively, as compared to the process air that has already been flowing through the evaporator and/or condenser. In the parallel-flow state, the refrigerant thus flows in the same general direction as the process air.

It is an embodiment that at least one 4/2 directional control valve is exactly one 4/2 control valve. Such a valve may be implemented in a specially compact and robust design. Generally, however, other types of valves and/or combinations of other valves may be used, e.g. two 3/2 directional control valves (3-way valves), four 2-way valves etc.

Thus, it is an embodiment that at least one 4/2 directional control valve comprises two 3/2 control valves. It is also an embodiment that at least one 4/2 directional control valve comprises four 2/2 control valves.

It is an embodiment that the household appliance is a home appliance having a drying function. In such a household appliance, the at least one refrigerant redirection device can be employed with particularly high energy savings concerning the heat pump circuit during a drying process while obtaining similar drying results.

It is an embodiment that the household appliance is a clothes or laundry drying appliance, e.g. a clothes dryer or a washer-dryer. The use of the at least one refrigerant redirection device as described above can give especially high energy savings.

It is an embodiment that the household appliance is a dishwasher.

It is even an embodiment that the household appliance is a refrigeration device. This embodiment makes use of the effect that employing the at least one refrigerant redirection device as described above not only gives energy savings if a load of the household appliance is to be dried (warmed up or heated up) but also when a load is to be cooled down.

The object is also achieved by a method for operating a household appliance as described above, the method comprising switching at least one refrigerant redirection device to reverse a flow direction of a refrigerant only through the evaporator and/or through the condenser.

The method can be embodied and adapted in analogy to the household appliance as described above and gives the same advantages.

The above described features and advantages of the invention as well as their kind of implementation will now be schematically described in more detail by at least one embodiment in the context of one or more figures.
- Fig.1: shows a diagram of a clothes dryer according to a first embodiment;
- Fig.2: shows a cross-sectional side view of a process air channel comprising a condenser in its counter-flow state;
- Fig.3: shows a cross-sectional side view of a process air channel comprising a condenser in its parallel-flow state;
- Fig.4: shows a partial diagram of a clothes dryer according to a second embodiment with its condenser in the counter-flow state;
- Fig.5: shows a partial diagram of the clothes dryer according to the second embodiment with its condenser in the parallel-flow state;
- Fig.6: shows a partial diagram of a clothes dryer according to a third embodiment with its condenser in the counter-flow state; and
- Fig.7: shows a partial diagram of the clothes dryer according to the third embodiment with its condenser in the parallel-flow state.

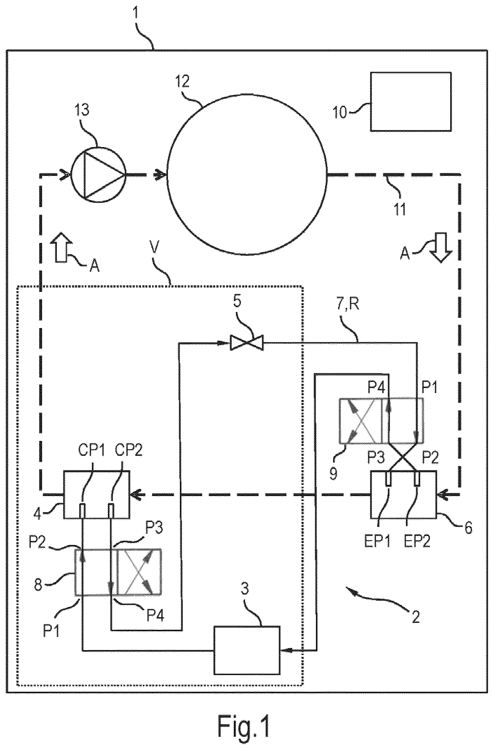

Fig.1 shows a diagram of a household appliance in form of a clothes dryer 1. The clothes dryer 1 comprises a heat pump 2, the heat pump 2 comprising an AC compressor 3, a condenser 4, an expansion device in form of a thermal expansion valve 5, and an evaporator 6 connected by refrigerant lines 7. The heat pump 2 further comprises a refrigerant redirection device in form of a first 4/2 directional control valve 8 to reverse a flow direction of a refrigerant R through the condenser 4. The heat pump 2 also comprises a refrigerant redirection device in form of a second 4/2 directional control valve 9 to reverse a flow direction of the refrigerant R through the evaporator 6. The control valves 8 and 9 are of the same type. The condenser 4 and the evaporator 6 may be of the same basic type (e. g., a finned tube heat exchanger) but may vary in their concrete design (e. g. regarding the number, diameter, and/or material of their pipes etc.).

Each of the control valves 8 and 9 has four ports P1, P2, P3, and P4 and two valve positions. In the shown first valve position, its first port P1 is connected to its second port P2 and its third port P3 is connected to its fourth port P4. In the second valve position, its first port P1 is connected to its third port P3 and its second port P2 is connected to its fourth port P4.

Regarding the first directional control valve 8, its first port P1 is connected to an outlet of the AC compressor 3, its second port P2 is connected to a first port CP1 of the condenser 4, its third port P3 is connected to a second port CP2 of the condenser 4, and its fourth port P4 is connected to an inlet of the thermal expansion valve 5.

Regarding the second directional control valve 9, its first port P1 is connected to an outlet of the thermal expansion valve 5, its second port P2 is connected to a first port EP1 of the evaporator 6, its third port P3 is connected to a second port EP2 of the evaporator 6, and its fourth port P4 is connected to an inlet of the evaporator 6.

For both valve positions, the refrigerant R moves from the compressor 3 to the first directional control valve 8, to the condenser 4, back through the first directional control valve 8, to the thermal expansion valve 5, to the second directional control valve 9, to the evaporator 6, again through the second directional control valve 9, and back to the compressor 3. By switching the control valves 8 and 9, only the flow direction of the refrigerant R through the condenser 4 and the evaporator 6, respectively, is reversed.

The valve positions of the control valves 8 and 9 may be independently switched by a control device in form of a central control unit 10. The shown valve positions of the control valves 8 and 9 place the condenser 4 and the evaporator 6 in their counter-flow state.

The clothes dryer 1 further comprises a process air circuit 11 for circulating process air A. The process air circuit 11 comprises - in that order in a flow direction of the process air A - a clothes drum 12, the evaporator 6 acting as a cooling unit to cool down and thus to dehumidify the humid process air A coming from the drum 12, the condenser 4 acting as heating unit to heat up the dehumidified process air A coming from the evaporator 6, and a fan 13 to move the process air A. The fan 13 may be placed at another position within the process air circuit 11, e.g. between the drum 12 and the evaporator 6. The condenser 4 and the evaporator 6 are shaped as heat exchangers to exchange heat between the process air A and the refrigerant R. The process air circuit 11 may comprise an additional heater (not shown), e. g. in the form of an electrical heating resistance, a heating light (infrared heating lamp) etc., to support heating up the dried process air A.

The central control unit 10 may further be used to control components 12, 13 of the process air circuit 11. The central control unit 10 may also be used to control other functions of the clothes dryer 1, e.g. a door latch etc. The central control unit 10 may be connected to at least one sensor (not shown).

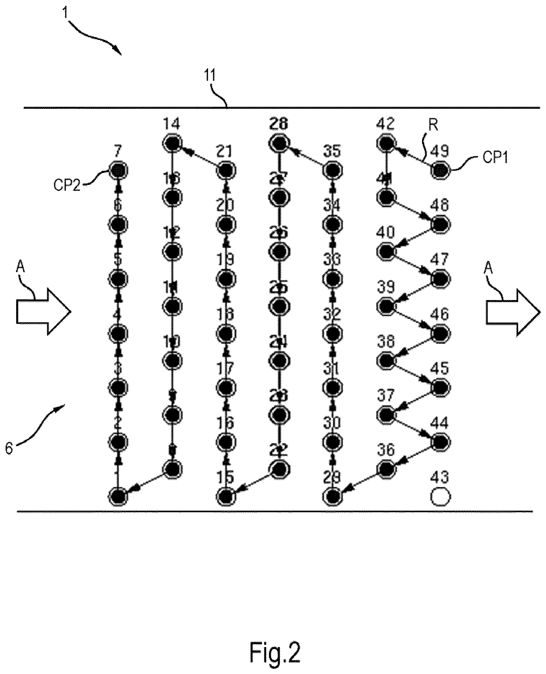

Fig.2 shows a cross-sectional side view of the process air channel 11 at a section comprising the condenser 4. The condenser 4 may be of a finned tube type, e. g. as disclosed in WO 2013/144875 A1. The pipes are shown as circles, denoted by numbers "1" to "49", with the pipe numbered "43" not being used. Thus, there are 48 parallel pipes or tubes that are aligned perpendicular to the flow direction of the process air A. The pipes numbered "7" and "49" are the condenser's 4 second port CP2 and first port CP1, respectively.

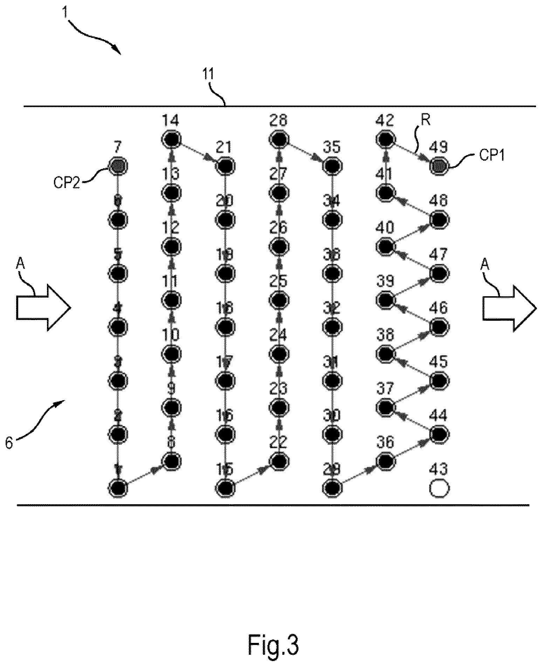

The condenser 4 is shown in its counter-flow state in which the first port CP1 (pipe "49") acts as a refrigerant input while the second port CP2 (pipe "7") acts as a refrigerant output. The first port CP1 and the second port CP2 of the condenser 4 are positioned at opposite ends of the condenser 4 regarding the flow direction of the process air A. While the second port CP2 is positioned at a front region of the condenser 4, the first port CP1 is positioned at a rear region. Thus, the refrigerant R is entering the condenser 4 at its rear and then moves / flows to its front. This counter-flow state achieves a more effective heat exchange (higher heat transfer rate) than the parallel-flow state in which the second port CP2 acts as the refrigerant input while the first port CP1 acts as the refrigerant output. The parallel-flow state is shown in Fig.3.

The same may hold in analogy for the evaporator 6 which may also be a finned tube heat exchanger. In its counter-flow state, its first port EP1 - which then acts as a refrigerant input - is advantageously positioned at a rear of the evaporator 6 with respect to a flow direction of the process air A. Its second port EP2 - which then acts as a refrigerant output - is positioned at the front of the evaporator 6. Accordingly, in its parallel-flow state, its first port EP1 acts as the refrigerant output while its second port EP2 acts as the refrigerant input.

The evaporator 6 may have less or more pipes than the condenser 4, e. g. 20 parallel pipes.

Compared to a "normal" or "base" configuration in which both the evaporator 6 and the condenser 4 are in their counter-flow states, the reversal of the flow direction of the refrigerant R in the evaporator 6 leads to only a slightly lower superheating and slightly higher subcooling of the refrigerant R. A condensation temperature and an evaporation temperature are only slightly higher such that the refrigerant cycle is moved to slightly higher working pressures, too. Reversing the evaporator 6 has neither a significant effect on the cooling power, i.e. on the power used for cooling down the humid process air A, nor on the heating power, i.e. on the power used for heating up the dry process air A. A compressor power, i.e. a power used up by the compressor 3, is only marginally higher (approx. 1% to 3%) while a mass flow rate of the refrigerant R is also only marginally higher (approx. 2% to 5%).

A reversal of the flow direction of the refrigerant R only in the condenser 4, however, leads to a significant decrease of the condensation temperature and the evaporation temperature as compared to the base configuration. The heat pump cycle thus works at lower working pressures. The subcooling is almost negligible but the superheating strongly increases. A decrease higher than 25% is obtained for the cooling power and the heating power. The compressor power is also lower (approx. 10%) as compared to the base configuration.

When the flow directions of the refrigerant R in both the condenser 4 and evaporator 6 are reversed (so that they both are in their parallel-flow state), the results are similar to the reversal of the flow direction in only the condenser 4. Compared to that, the condensation temperature and the evaporation temperatures are slightly smaller such that the refrigerant's R cycle is moved to slightly lower working pressures. There is almost no subcooling. The cooling capacity and the heating capacity decrease slightly more as compared to only the condenser 4 being in its parallel-flow state. The compressor power is even lower (approx. 13%) as compared to the base configuration.

Therefore, the reversal of the condenser 4 from its counter-flow state to its parallel-flow state has the highest relative effect.

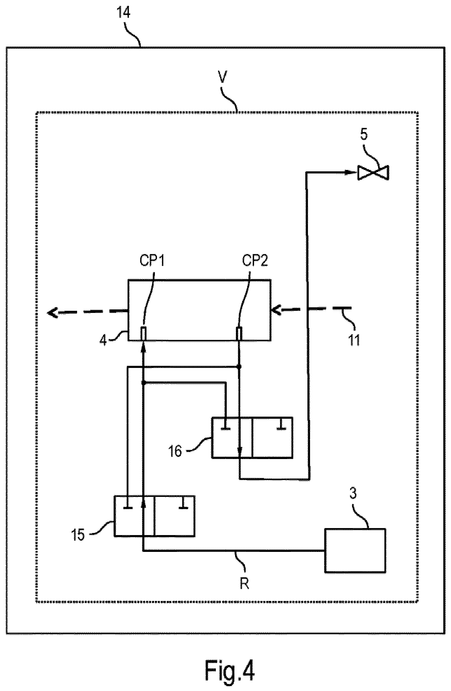

Fig.4 shows a partial diagram of a clothes dryer 14 according to a second embodiment. The clothes dryer 14 differs from clothes dryer 1 by a different set of directional control valves, as shown by the components of detail V. The other components (outside detail V) may be the same for all embodiments.

The detail V of clothes dryer 14 shows two 3/2 directional control valves 15 and 16 instead of the one 4/2 directional control valve 8 for reversing the flow direction of the refrigerant R within the condenser 4. The 4/2 directional control valve 9 for reversing the flow direction of the refrigerant R within the evaporator 6 may be replaced by two 3/2 directional control valves in an analogous manner (not shown).

The valve positions of the 3/2 directional control valves 15 and 16 are set such that the condenser 4 is in a counter-flow state.

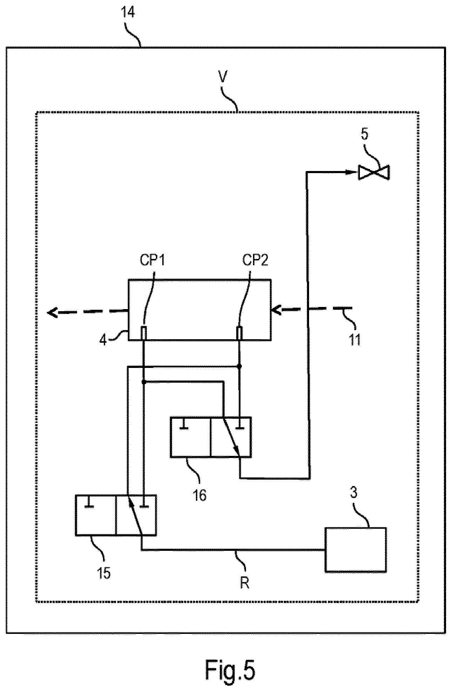

Fig.5 shows the components of fig.4 with the 3/2 directional control valves 15 and 16 being set such that the condenser 4 is in a parallel-flow state.

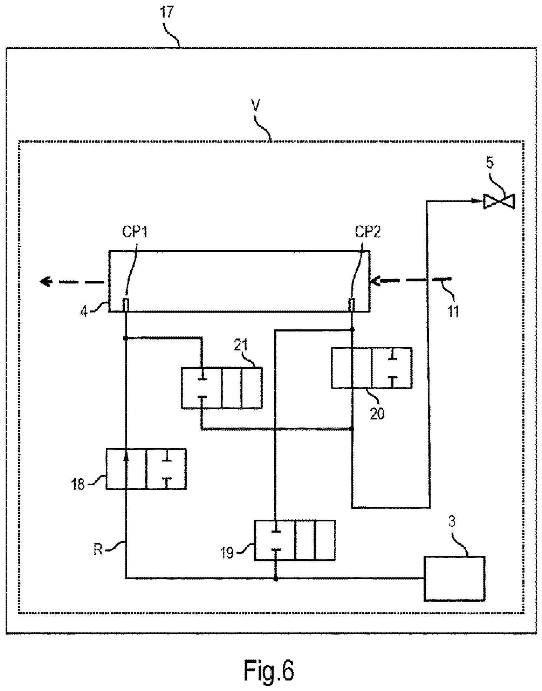

Fig.6 shows detail V of a clothes dryer 17 according to a third embodiment. The clothes dryer 17 differs from clothes dryer 1 and from clothes dryer 14 by yet another set of directional control valves.

The detail V of clothes dryer 17 shows four 2/2 directional control valves 18, 19, 20 and 21 for reversing the flow direction of the refrigerant R within the condenser 4 instead of, e.g., the one 4/2 directional control valve 8. The evaporator 6 may be connected to such a set of 2/2 directional control valves 18, 19, 20 and 21 in an analogous manner (not shown).

The valve positions of four 2/2 directional control valves 18, 19, 20 and 21 are set such that the condenser 4 is in a counter-flow state.

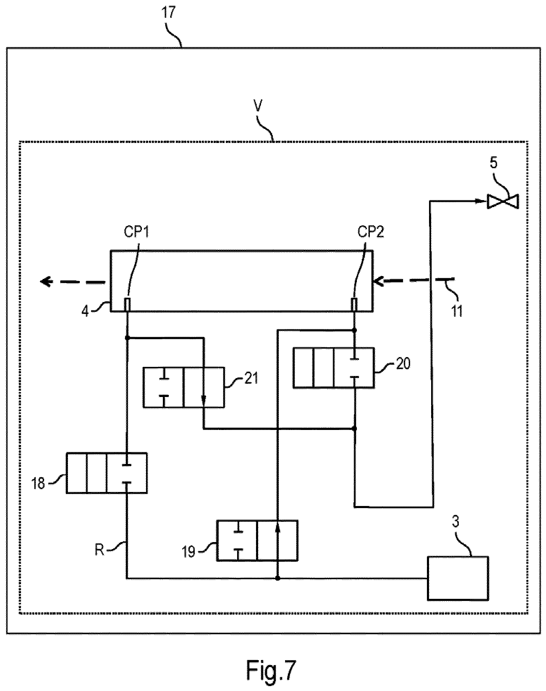

Fig.7 shows the components of fig.4 with the four 2/2 directional control valves 18, 19, 20 and 21 being set such that the condenser 4 is in a parallel-flow state.

Of course, the invention is not restricted to the described embodiments.

### List of Reference Signs

- 1: Clothes dryer
- 2: Heat pump
- 3: Compressor
- 4: Condenser
- 5: Thermal expansion valve
- 6: Evaporator
- 7: Refrigerant line
- 8: First 4/2 directional control valve
- 9: Second 4/2 directional control valve
- 10: Central control unit
- 11: Process air circuit
- 12: Drum
- 13: Fan
- 14: Clothes dryer
- 15: 3/2 directional control valve
- 16: 3/2 directional control valve
- 17: Clothes dryer
- 18: 2/2 directional control valve
- 19: 2/2 directional control valve
- 20: 2/2 directional control valve
- 21: 2/2 directional control valve
- A: Process air
- CP1: First port of the condenser
- CP2: Second port of the condenser
- EP1: First port of the evaporator
- EP2: Second port of the evaporator
- P1-P4: Ports of the 4/2 directional control valve
- R: Refrigerant

## Claims

1. A household appliance (1; 14; 17) comprising a heat pump (2), the heat pump (2) comprising a compressor (3), a condenser (4), an expansion device (5), and an evaporator (6) connected in series by a refrigerant circuit (7), wherein the household appliance (1) further comprises
- at least one refrigerant redirection device (8, 9; 15, 16; 18-21) to reverse a flow direction of a refrigerant (R) through the condenser (4) and/or through the evaporator (6)
**characterized in that**
the household appliance (1; 14; 17) comprises only a refrigerant redirection device (8) for the condenser (4), only a refrigerant redirection device for the evaporator (6), or both, reversing the use of ports of the condenser (4) and/or evaporator (6) inlet and outlet ports, such that the flow direction of the refrigerant (R) through the condenser (4) and/or
the evaporator (6), respectively, is reversed but the flow direction of the refrigerant in the heat pump is not reversed.

2. The household appliance (1; 14; 17) according to claim 1 wherein the compressor (3) is an AC compressor.

3. The household appliance (1; 14; 17) according to any of the preceding claims wherein the refrigerant redirection device comprises at least one directional control valve (8, 9; 15, 16; 18-21), wherein,
- in a first valve position of the at least one directional control valve (8, 9), a first port (P1) is connected to a second port (P2) and a third port (P3) is connected to a fourth port (P4), and wherein,
- in a second valve position of the at least one directional control valve (8, 9), the first port is (P1) connected to the third port (P3) and the second port (P2) is connected to the fourth port (P4).

4. The household appliance (1) according to claim 3, comprising a first 4/2 directional control valve (8) to reverse the flow direction of the refrigerant through the condenser, wherein
- the first port (P1) is connected to an outlet of the compressor (3),
- the second port (P2) is connected to a first port (CP1) of the condenser (4),
- the third port (P3) is connected to a second port (CP2) of the condenser (4), and
- the fourth port (P4) is connected to an inlet of the expansion device (5).

5. The household appliance (1) according to any of the claims 3 to 4 comprising a second 4/2 directional control valve (9) to reverse the flow direction of the refrigerant through the evaporator, wherein
- a first port (P1) is connected to an outlet of the expansion device (5),
- a second port (P2) is connected to a first port (EP1) of the evaporator (6),
- a third port (P3) is connected to a second port (EP2) of the evaporator (6), and
- a fourth port (P4) is connected to an inlet of the compressor (3).

6. The household appliance (1; 14; 17) according to any of the claims 3 to 5 wherein the household appliance (1) comprises a control device (10) that is adapted to control the valve positions of the least one directional control valve (8, 9; 15, 16; 18-21) for the condenser (4) and/or for the evaporator (6) based on their desired capacity as heat exchangers.

7. The household appliance (1; 14; 17) according to any of the preceding claims wherein the condenser (4) and/or the evaporator (6) are finned tube heat exchangers to exchange heat between the refrigerant (R) flowing through it and process air (A).

8. The household appliance (1; 14; 17) according to claim 7 wherein a refrigerant inlet port (CP1) and a refrigerant outlet port (CP2) of the condenser (4) and/or a refrigerant inlet port (EP1) and a refrigerant outlet port (EP2) of the evaporator (6) are positioned at opposite ends with respect to a flow direction of the process air (A).

9. The household appliance (1; 14; 17) according to any of the preceding claims wherein the household appliance (1) is a clothes drying appliance.

10. The household appliance according to any of the preceding claims wherein the household appliance is a dishwasher.

11. The household appliance according to any of the preceding claims wherein the household appliance is a refrigeration device.

12. A method for operating a household appliance (1; 14; 17) according to any of the preceding claims comprising a heat pump (2), the heat pump (2) comprising a compressor (3), a condenser (4), an expansion device (5), and an evaporator (6) connected in series by a refrigerant circuit (7), wherein the household appliance further comprises at least one refrigerant redirection device (8, 9; 15, 16; 18-21), the method comprising switching at least one refrigerant redirection device (8, 9; 15, 16; 18-21) to reverse a flow direction of a refrigerant (R) through the evaporator (6) and/or through the condenser (4).

## Patentansprüche

1. Haushaltsgerät (1; 14: 17), welches eine Wärmepumpe (2) umfasst, wobei die Wärmepumpe (2) einen Verdichter (3), einen Kondensator (4), eine Expansionsvorrichtung (5) und einen Verdampfer (6) umfasst, die durch einen Kältemittelkreislauf (7) in Reihe verbunden sind,
wobei das Haushaltsgerät (1) ferner umfasst:
- wenigstens eine Kältemittel-Umlenkvorrichtung (8, 9; 15,16; 18-21) zum Umkehren einer Fließrichtung eines Kältemittels (R) durch den Kondensator (4) und/oder durch den Verdampfer (6),
**dadurch gekennzeichnet, dass**
das Haushaltsgerät (1; 14: 17) nur eine Kältemittel-Umlenkvorrichtung (8) für den Kondensator (4), nur eine Kältemittel-Umlenkvorrichtung für den Verdampfer (6) oder beides umfasst, durch welche die Verwendung von Anschlüssen des Kondensators (4) und/oder Verdampfers (6) als Einlass- und Auslassanschlüsse umgekehrt wird, so dass die Fließrichtung des Kältemittels (R) durch den Kondensator (4) und/oder den Verdichter (6) jeweils umgekehrt wird, jedoch die Fließrichtung des Kältemittels in der Wärmepumpe nicht umgekehrt wird.

2. Haushaltsgerät (1; 14: 17) nach Anspruch 1, wobei der Verdichter (3) ein Wechselstrom-Verdichter ist.

3. Haushaltsgerät (1; 14: 17) nach einem der vorhergehenden Ansprüche, wobei die Kältemittel-Umlenkvorrichtung wenigstens ein Richtungssteuerventil (8, 9; 15, 16; 18-21) umfasst, wobei
- in einer ersten Ventilposition des wenigstens einen Richtungssteuerventils (8, 9) ein erster Anschluss (P1) mit einem zweiten Anschluss (P2) verbunden ist und ein dritter Anschluss (P3) mit einem vierten Anschluss (P4) verbunden ist, und wobei
- in einer zweiten Ventilposition des wenigstens einen Richtungssteuerventils (8, 9) der erste Anschluss (P1) mit dem dritten Anschluss (P3) verbunden ist und der zweite Anschluss (P2) mit dem vierten Anschluss (P4) verbunden ist.

4. Haushaltsgerät (1) nach Anspruch 3, welches ein erstes 4/2-Richtungssteuerventil (8) zum Umkehren der Fließrichtung des Kältemittels durch den Kondensator umfasst, wobei
- der erste Anschluss (P1) mit dem Auslass des Verdichters (3) verbunden ist,
- der zweite Anschluss (P2) mit einem ersten Anschluss (CP1) des Kondensators (4) verbunden ist,
- der dritte Anschluss (P3) mit einem zweiten Anschluss (CP2) des Kondensators (4) verbunden ist, und
- der vierte Anschluss (P4) mit einem Einlass der Expansionsvorrichtung (5) verbunden ist.

5. Haushaltsgerät (1) nach einem der Ansprüche 3 bis 4, welches ein zweites 4/2-Richtungssteuerventil (9) zum Umkehren der Fließrichtung des Kältemittels durch den Verdampfer umfasst, wobei
- ein erster Anschluss (P1) mit einem Auslass der Expansionsvorrichtung (5) verbunden ist,
- ein zweiter Anschluss (P2) mit einem ersten Anschluss (EP1) des Verdampfers (6) verbunden ist,
- ein dritter Anschluss (P3) mit einem zweiten Anschluss (EP2) des Verdampfers (6) verbunden ist, und
- ein vierter Anschluss (P4) mit einem Einlass des Verdichters (3) verbunden ist.

6. Haushaltsgerät (1; 14: 17) nach einem der Ansprüche 3 bis 5, wobei das Haushaltsgerät (1) eine Steuerungsvorrichtung (10) umfasst, welche dafür ausgelegt ist, die Ventilpositionen des wenigstens einen Richtungssteuerventils (8, 9; 15, 16; 18-21) für den Kondensator (4) und/oder für den Verdampfer (6) basierend auf ihrer gewünschten Kapazität als Wärmetauscher zu steuern.

7. Haushaltsgerät (1; 14: 17) nach einem der vorhergehenden Ansprüche, wobei der Kondensator (4) und/oder der Verdampfer (6) Rippenrohrwärmetauscher zum Austauschen von Wärme zwischen dem Kältemittel (R), dass sie durchströmt, und Prozessluft (A) sind.

8. Haushaltsgerät (1; 14: 17) nach Anspruch 7, wobei ein Kältemittel-Einlassanschluss (CP1) und ein Kältemittel-Auslassanschluss (CP2) des Kondensators (4) und/oder ein Kältemittel-Einlassanschluss (EP1) und ein Kältemittel-Auslassanschluss (EP2) des Verdampfers (6) an entgegengesetzten Enden, bezogen auf eine Fließrichtung der Prozessluft (A), positioniert sind.

9. Haushaltsgerät (1; 14: 17) nach einem der vorhergehenden Ansprüche, wobei das Haushaltsgerät (1) ein Wäschetrocknungsgerät ist.

10. Haushaltsgerät nach einem der vorhergehenden Ansprüche, wobei das Haushaltsgerät eine Geschirrspülmaschine ist.

11. Haushaltsgerät nach einem der vorhergehenden Ansprüche, wobei das Haushaltsgerät ein Kältegerät ist.

12. Verfahren zum Betreiben eines Haushaltsgeräts (1; 14: 17) nach einem der vorhergehenden Ansprüche, das eine Wärmepumpe (2) umfasst, wobei die Wärmepumpe (2) einen Verdichter (3), einen Kondensator (4), eine Expansionsvorrichtung (5) und einen Verdampfer (6) umfasst, die durch einen Kältemittelkreislauf (7) in Reihe verbunden sind, wobei das Haushaltsgerät ferner wenigstens eine Kältemittel-Umlenkvorrichtung (8, 9; 15, 16; 18-21) umfasst, wobei das Verfahren das Umschalten wenigstens einer Kältemittel-Umlenkvorrichtung (8, 9; 15, 16; 18-21) zum Umkehren einer Fließrichtung eines Kältemittels (R) durch den Verdampfer (6) und/oder durch den Kondensator (4) umfasst.

## Revendications

1. Appareil électroménager (1 ; 14 ; 17) comprenant une pompe à chaleur (2), la pompe à chaleur (2) comprenant un compresseur (3), un condenseur (4), un dispositif de détente (5), et un évaporateur (6) connectés en série par un circuit de réfrigérant (7), dans lequel l'appareil ménager (1) comprend en outre
- au moins un dispositif de redirection de réfrigérant (8, 9 ; 15, 16 ; 18-21) pour inverser le sens d'écoulement d'un réfrigérant (R) à travers le condenseur (4) et/ou à travers l'évaporateur (6)
**caractérisé en ce que**
l'appareil ménager (1 ; 14 ; 17) comprend uniquement un dispositif de redirection de réfrigérant (8) pour le condenseur (4), uniquement un dispositif de redirection de réfrigérant pour l'évaporateur (6), ou les deux, inversant l'utilisation des orifices d'entrée et de sortie du condenseur (4) et/ou de l'évaporateur (6), de sorte que le sens du réfrigérant (R) à travers le condenseur (4) et/ou l'évaporateur (6), respectivement, soit inversé, mais que le sens d'écoulement du réfrigérant dans la pompe à chaleur ne soit pas inversé.

2. Appareil électroménager (1 ; 14 ; 17) selon la revendication 1, dans lequel le compresseur (3) est un compresseur à courant alternatif.

3. Appareil électroménager (1 ; 14 ; 17) selon l'une quelconque des revendications précédentes, dans lequel le dispositif de redirection de réfrigérant comprend au moins une vanne de commande directionnelle (8, 9 ; 15, 16 ; 18-21), dans lequel,
- dans une première position de vanne de la au moins une vanne de commande directionnelle (8, 9), un premier orifice (P1) est connecté à un deuxième orifice (P2) et un troisième orifice (P3) est connecté à un quatrième orifice (P4), et dans lequel
- dans une deuxième position de vanne de la au moins une vanne de commande directionnelle (8, 9), le premier orifice (P1) est connecté au troisième orifice (P3) et le deuxième orifice (P2) est connecté au quatrième orifice (P4).

4. Appareil électroménager (1) selon la revendication 3, comprenant une première vanne de commande directionnelle 4/2 (8) pour inverser le sens d'écoulement du réfrigérant à travers le condenseur, dans lequel
- le premier orifice (P1) est connecté à une sortie du compresseur (3),
- le deuxième orifice (P2) est connecté à un premier orifice (CP1) du condensateur (4),
- le troisième orifice (P3) est connecté à un deuxième orifice (CP2) du condensateur (4), et
- le quatrième orifice (P4) est connecté à une entrée du dispositif de détente (5).

5. Appareil électroménager (1) selon l'une quelconque des revendications 3 à 4, comprenant une deuxième vanne de commande directionnelle 4/2 (9) pour inverser le sens d'écoulement du réfrigérant à travers l'évaporateur, dans lequel
- un premier orifice (P1) est connecté à une sortie du dispositif de détente (5),
- un deuxième orifice (P2) est connecté à un premier orifice (EP1) de l'évaporateur (6),
- un troisième orifice (P3) est connecté à un deuxième orifice (EP2) de l'évaporateur (6), et
- un quatrième orifice (P4) est connecté à une entrée du compresseur (3).

6. Appareil électroménager (1 ; 14 ; 17) selon l'une quelconque des revendications 3 à 5, dans lequel l'appareil électroménager (1) comprend un dispositif de commande (10) qui est conçu pour commander les positions de vanne de la au moins une vanne de commande directionnelle (8, 9 ; 15, 16 ; 18-21) pour le condenseur (4) et/ou pour l'évaporateur (6) en fonction de leur capacité souhaitée en tant qu'échangeurs de chaleur.

7. Appareil électroménager (1 ; 14 ; 17) selon l'une quelconque des revendications précédentes, dans lequel le condenseur (4) et/ou l'évaporateur (6) sont des échangeurs de chaleur à tubes à ailettes pour échanger de la chaleur entre le réfrigérant (R) qui les traverse et l'air de processus (A).

8. Appareil électroménager (1 ; 14 ; 17) selon la revendication 7, dans lequel un orifice d'entrée de réfrigérant (CP1) et un orifice de sortie de réfrigérant (CP2) du condenseur (4) et/ou un orifice d'entrée de réfrigérant (EP1) et un orifice de sortie de réfrigérant (EP2) de l'évaporateur (6) sont positionnés à des extrémités opposées par rapport à un sens d'écoulement de l'air de processus (A).

9. Appareil électroménager (1 ; 14 ; 17) selon l'une quelconque des revendications précédentes, dans lequel l'appareil électroménager (1) est un appareil de séchage de vêtements.

10. Appareil électroménager selon l'une quelconque des revendications précédentes, dans lequel l'appareil électroménager est un lave-vaisselle.

11. Appareil électroménager selon l'une quelconque des revendications précédentes, dans lequel l'appareil électroménager est un dispositif de réfrigération.

12. Procédé pour faire fonctionner un appareil électroménager (1 ; 14 ; 17) selon l'une quelconque des revendications précédentes, comprenant une pompe à chaleur (2), la pompe à chaleur (2) comprenant un compresseur (3), un condenseur (4), un dispositif de détente (5) et un évaporateur (6) connectés en série par un circuit de réfrigérant (7), l'appareil électroménager comprenant en outre au moins un dispositif de redirection de réfrigérant (8, 9 ; 15, 16 ; 18-21), le procédé comprenant la commutation d'au moins un dispositif de redirection de réfrigérant (8, 9 ; 15, 16 ; 18-21) pour inverser le sens d'écoulement d'un réfrigérant (R) à travers l'évaporateur (6) et/ou à travers le condenseur (4).
